Europäisches Patentamt

**European Patent Office**

Office européen des brevets

(19)

(11) **EP 0 750 276 B1**

(12) **FASCICULE DE BREVET EUROPEEN**

(45) Date de publication et mention
de la délivrance du brevet:
**05.11.2003 Bulletin 2003/45**

(51) Int Cl.⁷: **G06K 19/077**

(21) Numéro de dépôt: **96401291.8**

(22) Date de dépôt: **13.06.1996**

(54) **Composant micro-électronicque pour une carte sans contact passive**

Elektronisches Bauelement für eine kontaktlose passive Karte

Electronic circuit for a contactless passive card

(84) Etats contractants désignés:
**DE IT**

(30) Priorité: **22.06.1995 FR 9507514**

(43) Date de publication de la demande:
**27.12.1996 Bulletin 1996/52**

(60) Demande divisionnaire:
**00125993.6 / 1 091 312**
**03100095.3 / 1 310 909**

(73) Titulaires:
• **FRANCE TELECOM**
  **75015 Paris (FR)**
• **LA POSTE**
  **F-92777 Boulogne Billancourt (FR)**

(72) Inventeurs:
• **Thorigne, Yves**
  **14790 Verson (FR)**

• **Bouvier, Jacky**
  **38240 Meylan (FR)**

(74) Mandataire: **Grynwald, Albert**
  **Cabinet Grynwald,**
  **127, rue du Faubourg Poissonnière**
  **75009 Paris (FR)**

(56) Documents cités:
  **EP-A- 0 525 642**      **WO-A-92/08209**
  **WO-A-93/15417**

• **MOUGAHED DARWISH: "Choisir sa technologie
  pour un asic mixte" ELECTRONIQUE, no. 25,
  pages 49-51, XP000334566 PARIS**
• **REINHARD JURISH: "Identifikation : kontaktlos
  via hochfrequenz" ELEKTRONIK, vol. 42, no. 9,
  4 mai 1993 (1993-05-04), pages 86-90,92,
  XP000362956 MÜNCHEN**
• **Lindner: Taschenbuch der Elektrotechnik und
  Elektronik; pages 141-150 VEB Fachbuchverlag
  Leipzig 1985 ISBN 3 87144 752 8**

**Description**

La présente invention a pour objet un composant micro-électronique pour carte sans contact passive, une carte sans contact passive supportant un tel composant, une station destinée à être électromagnétiquement couplée avec une telle carte sans contact passive et un procédé de fabrication dudit composant micro-électronique.

Elle trouve une application générale dans le transfert uni-ou bidirectionnel de données entre une carte sans contact passive et une station distante.

D'une manière générale, une carte sans contact contient ou non une source d'énergie interne. Dans le premier cas, il s'agit d'une carte active, tandis que dans le second cas, il s'agit d'une carte passive.

La carte sans contact passive reçoit, par couplage électromagnétique, l'énergie dont elle a besoin, de la station distante. Elle est dite de proximité dans la mesure où sa distance de fonctionnement avec la station est généralement inférieure ou égale à quelques millimètres.

En pratique, une carte sans contact passive supporte un composant micro-électronique comprenant une bobine (appelée encore antenne ou self inductance) pour l'alimentation par induction du composant et pour le transfert inductif avec la station d'un signal représentatif de données, et des moyens de traitement alimentés par ladite bobine et propres à traiter ledit signal ainsi transféré ou à transférer.

Du point de vue technologique, on distingue deux catégories distinctes de cartes sans contact passives.

Dans la première catégorie, le couplage électromagnétique est assuré par une antenne (ou plusieurs), réalisée sur un substrat différent de celui du composant micro-électronique.

Plus précisément, l'antenne est gravée sur un substrat choisi, lui-même placé dans le matériau constitutif de la carte (PVC, ABS, polycarbonate, etc). Le composant micro-électronique est, quant à lui, assemblé à l'antenne par des fils soudés. Cette première catégorie est appelée, ci-après carte sans contact passive à bobine assemblée. Le procédé de fabrication de cette carte est onéreux à cause des opérations d'assemblage par fils.

Dans la seconde catégorie, la bobine est gravée directement sur le composant micro-électronique, le plus souvent en matériau silicium. Cette seconde catégorie est appelée, ci-après, carte sans contact passive à bobine intégrée, ou "coil on chip". Le procédé de fabrication de cette carte intégrée est sensiblement simplifié par rapport à celle assemblée, puisque différentes opérations d'assemblage sont supprimées, en particulier la connexion du composant micro-électrique à l'antenne.

Toutefois, la surface de la bobine intégrée est généralement plus faible que celle d'une antenne assemblée dans la mesure où la surface de la bobine intégrée est limitée par la surface du composant que l'on souhaite la plus petite possible pour réduire les coûts de fabrication et par la surface qu'occupe nécessairement les moyens de traitement du composant, ce qui limite d'autant l'énergie transmise à la carte sans contact passive.

De plus, la configuration tridimensionnelle des spires conductrices d'une bobine intégrée apporte un certain nombre de difficultés, notamment la création de composants parasites, par exemple la formation d'un condensateur dont la capacité peut être non négligeable, ce qui conduit à une réduction de la puissance électrique disponible sur ledit composant.

L'article ELECTRONIQUE No 25, Février 1993 PARIS, pages 49-51, XP 000334566, MOUGAHED DARWISH, "Choisir sa technologie pour un asic mixte", décrit un circuit intégré sans alimentation interne comprenant des moyens de traitement pour traiter un signal représentatif de données à transférer vers une station distante, et une bobine intégrée sur silicium afin de fournir l'énergie au circuit intégré.

Seul un petit nombre d'enroulements est ici confectionné selon un procédé de métallisation conventionnelle des circuits intégrés, ce qui empêche d'induire une énergie suffisante pour alimenter des moyens de traitement assurant un transfert bidirectionnel des données.

Le Demandeur s'est posé le problème de réaliser un composant micro-électronique à bobine intégrée, pour carte sans contact passive, permettant de conférer une énergie suffisamment élevée pour alimenter les moyens de traitement du composant capables de traiter le transfert bidirectionnel des données entre une carte et une station, tout en évitant la création de composants parasites, et cela avec des coûts de fabrication sensiblement inférieurs à ceux d'une carte à contacts ou d'une carte sans contact passive à bobine assemblée.

Ce but est atteint par un composant micro-électronique du type à bobine intégrée décrit ci-avant, qui présente les caractéristiques de la revendication 1.

Par exemple, la surface du composant est un carré de 8 mm$^2$.

Selon un autre mode de réalisation préféré de l'invention, la réalisation de la bobine intégrée fait appel à une filière micro-électronique dite à 0,5 microns permettant de réaliser la métallisation de la bobine intégrée sur plusieurs niveaux, ce qui permet d'obtenir une réduction correspondante de la surface de la bobine intégrée et minimise d'autant les coûts de fabrication. Dans ce mode de réalisation de l'invention, la surface du composant est, par exemple, un carré de 4 mm$^2$ et la bobine intégrée est réalisée sur 3 niveaux de métallisation.

En pratique, les spires de la bobine intégrée sont réalisées sur le pourtour de la surface totale du composant, autour des moyens de traitement.

Selon un autre aspect de l'invention, les moyens de traitement comprennent des moyens de redressement du signal alternatif, haute fréquence, transféré par induction par la station, en présence d'un champ magnétique, en un signal continu, modulé en fonction des données transmises par la station, et des moyens de démodulation du signal continu modulé ainsi redressé pour récupérer les données transmises par la station.

Par exemple, les moyens de démodulation sont du type à démodulation d'amplitude, ce qui permet de simplifier les moyens de traitement, et de réduire la puissance nécessaire à ces moyens de traitement.

Selon encore un autre aspect de l'invention, les moyens de traitement comprennent des moyens de modulation du signal alternatif, haute fréquence, aux bornes de la bobine, en présence d'un champ magnétique, pour la transmission de données du composant vers la station.

En pratique, les moyens de modulation sont du type à modulation d'amplitude, obtenue par modulation de charge sur la tension d'alimentation.

Selon une caractéristique importante de l'invention, les moyens de traitement comprennent en outre :

- des moyens de récupération d'un signal d'horloge à partir du signal alternatif haute fréquence transféré par induction par la station distante, en présence d'un champ magnétique,

- des moyens de mémorisation de données, cadencés selon ledit signal d'horloge ainsi récupéré, et

- des moyens de lecture/écriture de données dans lesdits moyens de mémorisation, cadencés selon ledit signal d'horloge ainsi récupéré.

La présente invention a également pour objet une carte sans contact passive, comprenant le composant décrit ci-avant.

La présente invention a également pour objet une station destinée à être électromagnétiquement couplée avec une telle carte sans contact passive.

Enfin, la présente invention a également pour objet un procédé d'obtention d'un composant micro-électronique pour carte sans contact passive, destiné à être électromagnétiquement couplé à une station distante pour le transfert de données entre le composant et la station.

De façon connue, le procédé comprend les étapes suivantes :

- a) réaliser en technologie des circuits intégrés sur le substrat du composant des moyens de traitement propres à traiter un signal représentatif de données ainsi transféré,
- b) réaliser en technologie intégrée plane par métallisation et graver directement sur la surface du composant les spires d'une bobine pour l'alimentation par induction des moyens de traitement du composant et pour le transfert inductif avec la station dudit signal représentatif de données.

Ce procédé présente les caractéristiques de la partie caractérisante de la revendication 11.

Selon un autre aspect de l'invention, la bobine est réalisée par exemple sur trois niveaux de métallisation selon une filière micro-électronique à 0,5 microns.

D'autres caractéristiques et avantages de l'invention apparaîtront à la lumière de la description détaillée ci-après et des dessins annexés dans lesquels :

- la figure 1 est une vue schématique du couplage inductif d'une station distante et d'une carte sans contact passive ;

- la figure 2 est un synoptique des moyens essentiels de la station destinée à être couplée électromagnétiquement avec le composant de la carte sans contact selon l'invention ;

- la figure 3 est un schéma équivalent d'une partie des moyens essentiels du composant selon l'invention ;

- la figure 4 est une vue de dessus d'un circuit intégré selon l'invention, comprenant les spires d'une self inductance plane imprimée ou réalisée par photolithographie ; et

- la figure 5 est une représentation schématique du tracé des spires du circuit intégré de la figure 4;

- la figure 6 est une vue en coupe transversale du composant à trois niveaux de métallisation selon l'invention ; et

- la figure 7 est un organigramme illustrant le choix de la largeur des spires de la bobine intégrée et de leur nombre selon l'invention.

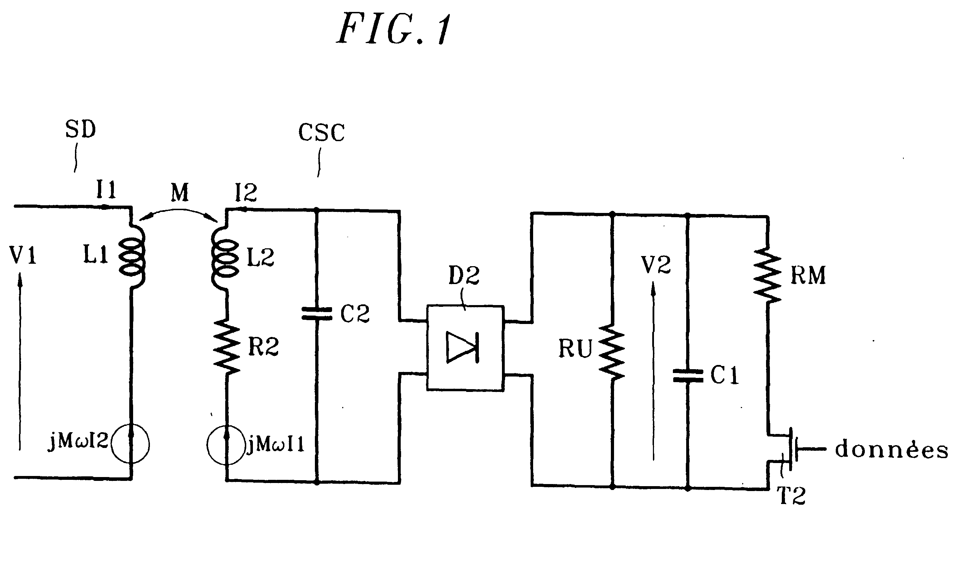

En référence à la figure 1, l'antenne L1 de la station distante SD, est couplée électromagnétiquement à l'inductance (ou bobine) L2 de la carte sans contact passive CSC. L'antenne L1 est réalisée sous la forme d'un bâtonnet, ou d'un tore avec entrefer, en matériau magnétique sur lequel sont enroulées plusieurs spires parcourues par un courant I1. L'inductance L2 est constituée d'un ensemble de spires, gravées dans le composant de la carte, comme on le décrira plus en détail ci-après. Le courant I2 parcourt les spires de la bobine intégrée L2.

Le couplage inductif se définit par la mutuelle inductance, M, entre les circuits L1 et L2. Le couplage est matérialisé par les deux générateurs de tension jMwI2, côté station, délivrée aux bornes de l'antenne L1, et jMwI1, côté carte, délivrant la tension V2 aux bornes de l'inductance L2. Le circuit de la carte est caractérisé par l'inductance L2, le condensateur de l'antenne C2 et la résistance de perte R2. La tension induite V2 dans l'inductance L2 est redressée par un pont redresseur D2, puis est filtrée par un condensateur de lissage CL.

La résistance RU, montée en parallèle avec le condensateur de lissage CL, représente ici la résistance de charge équivalente, c'est à dire l'ensemble des circuits électroniques du composant dont la consommation serait équivalente à celle de RU.

La résistance RM représente la résistance de modulation de charge que l'on décrira plus en détail ci-après.

Le transistor T2 est ou n'est pas passant au rythme des données envoyées par le composant vers la station distante.

Comme on le verra plus en détail ci-après, les valeurs numériques des éléments du composant sont choisies selon une loi prédéterminée selon l'invention. En pratique, la résistance RU est de l'ordre de 9 KOhms, la tension continue V2 est de l'ordre de 3 Volts, et la puissance disponible sur le composant est de l'ordre de 1 mWatts.

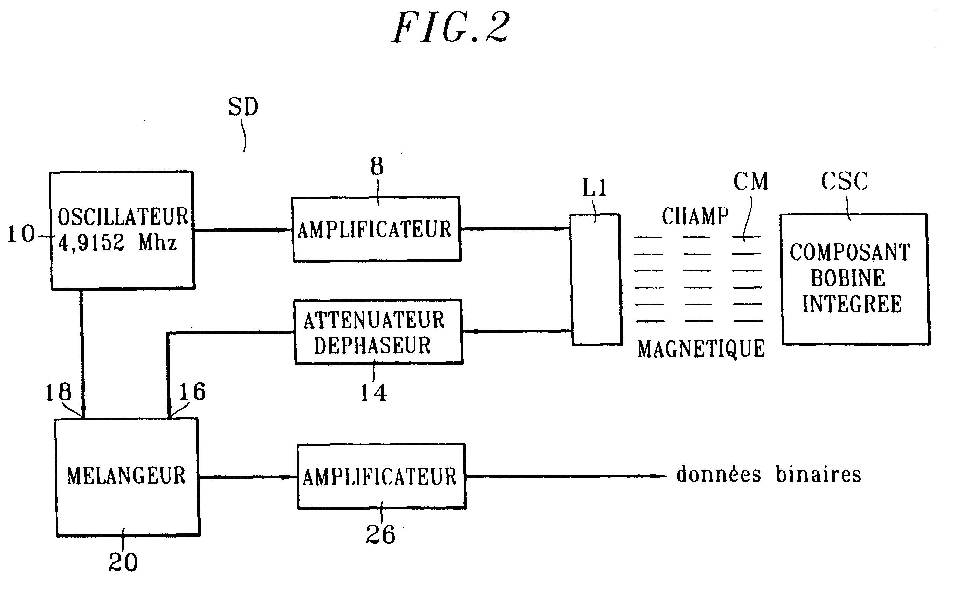

Sur la figure 2, la carte sans contact passive CSC est couplée électromagnétiquement à la station distante SD, à travers un champ magnétique CM par exemple de l'ordre de 5 Gauss ou plus. La station distante assure les fonctions d'alimentation et d'échange de données avec la carte sans contact passive. En fonctionnement, la carte sans contact est espacée d'une distance de l'ordre 2 mm du solénoïde L1 de la station, et dans l'axe de celui-ci.

Un oscillateur 10 délivre un signal alternatif, haute fréquence F1 au solénoïde L1, à travers des moyens d'amplification 8.

Par exemple, la fréquence F1 de l'oscillateur est de 4,9152 - Mhz.

En pratique, le solénoïde L1 est réalisé sur un mandrin, avec un noyau magnétique. Il est constitué de 16 spires d'une longueur respective de 9 mm et d'un diamètre respectif de 9 mm. Il est à remarquer que le signal haute fréquence F1 permet de transmettre simultanément l'énergie, l'horloge et les données au composant CSC.

Un réseau atténuateur-déphaseur 14 est prévu pour recevoir le signal transmis par la carte. Ce réseau atténuateur-déphaseur 14 adapte le niveau d'entrée, voisin de 120 V, crête à crête, aux bornes du solénoïde L1, à une quarantaine de millivolts crête à crête, ce qui correspond à une atténuation de 70 dB. Par exemple, le réseau atténuateur-déphaseur 14 comprend un réseau capacitif diviseur par 100, puis un réseau LRC atténuateur et déphaseur de façon à présenter le signal en phase avec le signal émanant de l'oscillateur 10 à la fréquence F1, à savoir 4,9152 Mhz.

Un mélangeur 20 comprend une entrée 16, pour recevoir le signal issu de l'atténuateur 14, et une entrée 18, pour recevoir le signal issu de l'oscillateur 10.

Le mélangeur 20 présente un gain de conversion de l'ordre de 16 dB.

Un amplificateur 26 est placé à la sortie du mélangeur 20. Cet amplificateur 26 a un gain de 80 dB et une bande passante de 50 Khz. Il est constitué de trois cellules, la première est un filtre passif RC adapté en impédance par rapport à la sortie du mélangeur. Les deux cellules suivantes sont constituées d'un amplificateur opérationnel de 40 dB chacune avec une bande passante de 50 Khz. Le premier amplificateur opérationnel est monté en montage inverseur, tandis que le second est monté en non-inverseur pour des raisons de stabilité.

Des moyens de remise en forme (non représentés) sont connectés à la sortie des moyens amplificateurs pour remettre en forme les données ainsi reçues, en données binaires.

Nous faisons de nouveau référence à la figure 1.

La transmission des données du composant vers la station met en oeuvre le principe de la modulation de charge. En bref, il s'agit de faire varier la charge présente aux bornes de l'alimentation.

La résistance de charge varie entre RU (transistor non passant) et RU.RM/RU+RM (transistor passant).

Le coefficient de surtension du solénoïde L1 varie en fonction de la puissance dissipée par le composant. La tension V1 présente aux bornes du solénoïde présente alors une légère variation. La modulation de charge se traduit, aux bornes du solénoïde L1, par une modulation d'amplitude. En pratique, pour une résistance de modulation égale à 16 Kohms, l'indice de modulation est, ici, de l'ordre de 0,2% .

La transmission de données dans le sens composant vers station est de l'ordre de 9,6 Kbits/s.

Par ailleurs, la tension de forme sinusoïdale, disponible aux bornes de l'inductance L2, permet avec des moyens de récupération d'horloge, de générer plusieurs horloges, elles-mêmes nécessaires au fonctionnement des circuits logiques du composant.

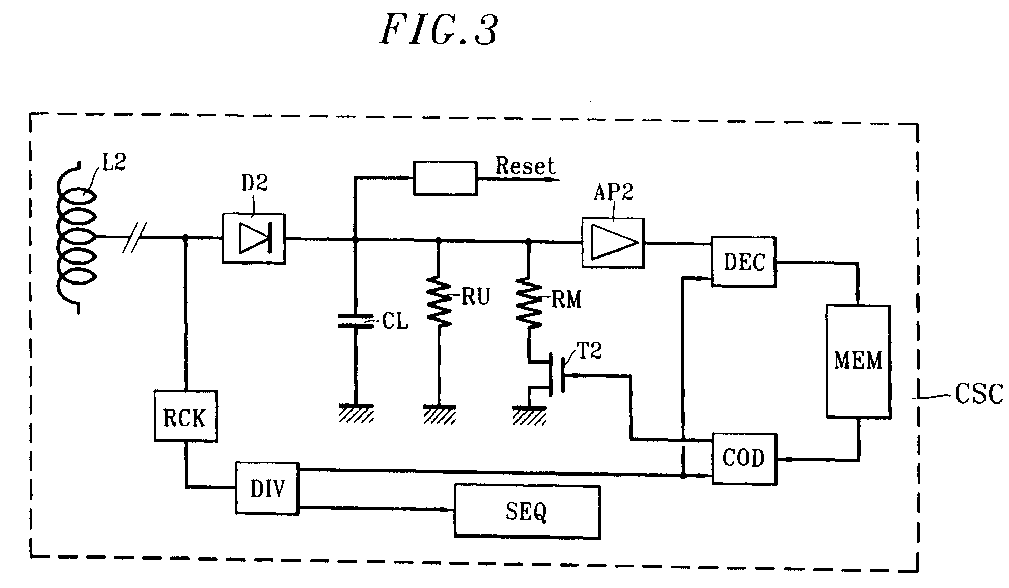

En référence à la figure 3, des moyens de récupération d'horloge RCK sont disposés à la sortie de l'inductance L2 pour remettre en forme la tension alternative, sinusoïdale, présente aux bornes de l'inductance L2. Les moyens RCK génèrent alors un signal logique de fréquence 4,9152 Mhz.

Des moyens diviseurs DIV sont reliés aux moyens de récupération d'horloge RCK pour diviser le signal logique à une fréquence appropriée. Par exemple, les moyens diviseurs divisent la fréquence ainsi récupérée par 32, pour obtenir une fréquence à 153,6 Khz, destinée à cadencer un séquenceur SEQ.

Les moyens diviseurs DIV divisent aussi le signal logique ainsi récupéré, par 512, pour obtenir une fréquence de 9600 Hz, destinée à cadencer des moyens de codage COD et de décodage DEC que l'on décrira plus en détail ci-après.

La transmission des données de la station vers le composant est basée sur la modulation d'amplitude du signal. Au niveau du composant, la démodulation est réalisée par le pont redresseur D2 et l'ensemble constitué par la résistance de charge RU et le condensateur de lissage CL.

Avantageusement, après suppression de la composante continue, le signal démodulé d'amplitude, par exemple 0,3 Volts avec un taux de démodulation de 10% et une tension d'alimentation de 3 Volts, est amplifié par des moyens amplificateurs AP2 de façon à générer un signal aux niveaux logiques. Ces moyens amplificateurs AP2 suppriment en outre la composante continue du signal égal à V2, avant amplification, pour n'amplifier que le signal, avantageusement codé de type Manchester.

Le codage d'information, est de préférence de type Manchester, c'est-à-dire que l'état logique O est codé en ligne par la succession de deux éléments binaires, 1 suivi de 0, tandis que l'état logique 1 est codé par le doublet 01. Le débit binaire est ici deux fois plus élevé que le débit d'informations. Ce codage d'information a l'avantage d'améliorer la transmission des informations par la suppression de la composante continue.

Les données binaires sont mémorisées dans des registres MEM. Les données transmises par la station sont décodées par des moyens de décodage Manchester DCC avant mémorisation. Au contraire, les données à transmettre vers la station, sont codées par des moyens de codage COD avant envoi via le transistor T2. Une fonction de RESET est également disponible pour initialiser correctement les éléments logiques du composant.

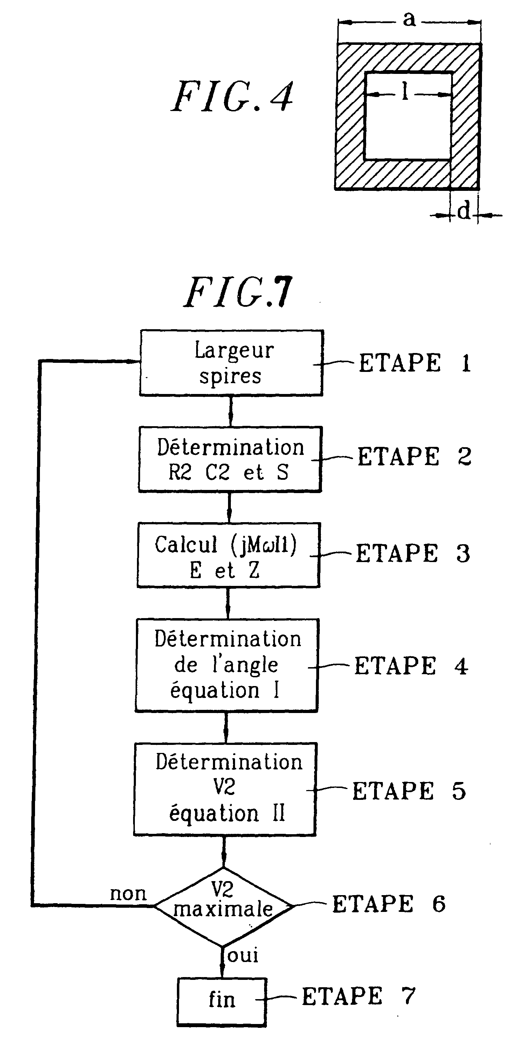

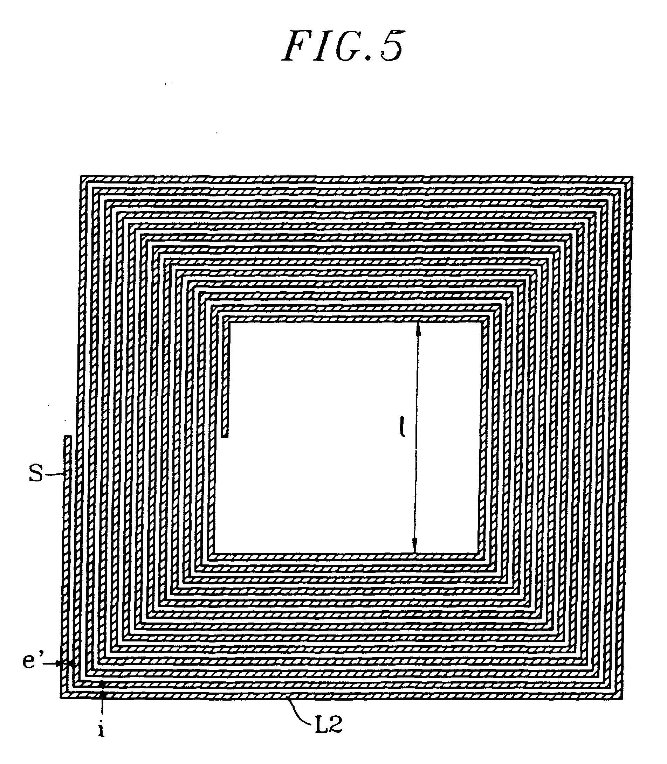

En référence aux figures 4 et 5, la self inductance L2 est réalisée par métallisation sur le pourtour du composant sensiblement inoccupé par les moyens de traitement, et autour desdits moyens de traitement capables d'assurer le transfert bidirectionnel des données. Cette inductance constitue un dipôle magnétique formé de plusieurs spires juxtaposées et enroulées conformément au tracé représenté en figure 5. Les spires sont non jointives. La distance i entre deux spires adjacentes est appelée isolement. Le pas des spires e est égal à la somme de l'isolement i et de la largeur d'une spire e'. Par exemple, le pas e est égal à 8 $\mu$m avec e' = 6 $\mu$m et i = 2 $\mu$m. Le nombre de spires, ainsi que leur largeur sont définis selon plusieurs critères. L'un des critères principaux est le rendement de la télé-alimentation. Un autre correspond à la surface disponible sur le composant ainsi que la variation de la tension lors du transfert des données.

En premier lieu, le rendement de la télé-alimentation doit permettre l'obtention d'une tension induite V2 ayant une valeur suffisante pour alimenter les éléments logiques du composant.

En second lieu, la variation de la tension $\Delta$V2 lors de la modulation de charge (c'est-à-dire lors de la transmission des données du composant vers la station ou réciproquement) doit être faible, de façon à ne pas perturber le fonctionnement des circuits logiques du composant.

En troisième lieu, la surface S disponible pour la gravure des spires de l'inductance L2 sur le composant doit être suffisamment grande pour générer la tension induite V2 choisie et suffisamment petite pour réduire les coûts de production du composant.

L'optimisation du choix de ces paramètres s'effectue selon le procédé décrit en référence à la figure 7.

Tout d'abord, on choisit les paramètres physiques du composant, c'est-à-dire sa surface et le nombre de niveaux de métallisation des spires. Par exemple, le composant présente une surface de 8 mm$^2$, de forme carrée, avec a = 2,83 mm, 1 = 1,7 mm, et d = 0,565 mm. Le nombre de métallisations est ici égal à 1.

Ensuite, on fait varier, selon une boucle, la largeur des spires, jusqu'à l'obtention d'une tension V2 optimale, c'est-à-dire la plus élevée possible, et d'une variation $\Delta$V2 optimale, c'est-à-dire la plus petite possible (étape 1).

Pour cela, on détermine tout d'abord, la valeur des paramètres R2, C2 et S (étape 2).

La résistance R2 est donnée par l'équation (I) en annexe.

La surface S est donnée par l'équation (II) en annexe.

A partir de R2 et S, on calcule la valeur de (jM$\omega$ I1)$_{crête}$ qui est proportionnelle à la somme des surfaces des spires (étape 3).

Il convient alors de déterminer la valeur du condensateur C2, par exemple par l'utilisation d'un logiciel de simulation électrique. La connaissance de C2 permet de calculer les valeurs de E (équation III en annexe) et Z (équation IV en annexe) (étape 3).

Ces deux valeurs E et Z sont ensuite reportées dans l'équation V en annexe (étape 4).

Enfin, la connaissance de l'angle $\theta$1 de conduction des moyens de redressement D2 permet de calculer la tension V2 selon l'équation VI en annexe.

Cette démarche est faite pour différentes largeurs de spires, afin de déterminer la valeur maximale de V2.

Dans un premier mode de réalisation dans lequel le composant est de forme carrée avec une surface égale à 8 mm$^2$, où la longueur a est égale à 2,83 mm et la largeur interne 1 est égale à 1,7 mm avec une largeur totale d des spires de l'ordre de 0,565 mm, la bobine et la self inductance occupent une surface sensiblement égale à 60% de la surface totale du composant. Dans ce cas de figure, la bobine est réalisée sur un seul niveau de métallisation.

Les Demandeurs ont observé que les valeurs optimales correspondent à un composant présentant une tension V2 égale à 2,7 V, un angle θ1 égal à 52,4°, une surface S égale à 367 mm$^2$, une résistance R2 égale à 3,46 KOhms, un nombre de spires n égal à 69, une largeur e' égale à 6 μm et une induction égale à 5,6 Gauss.

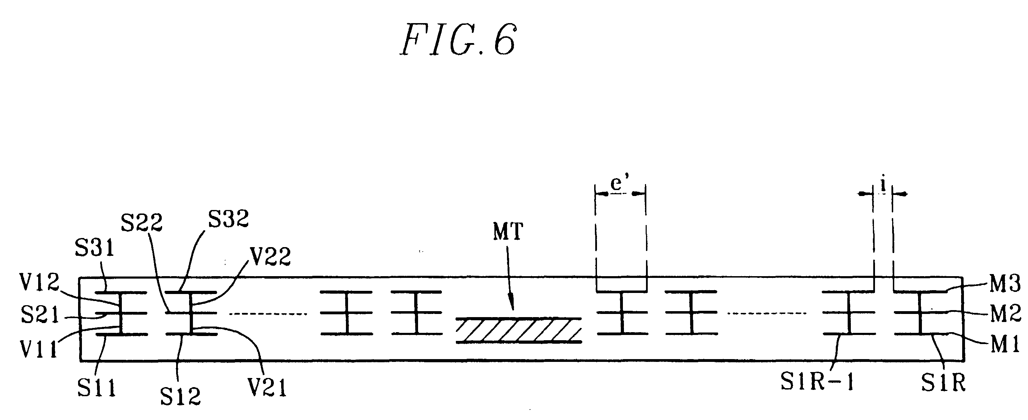

Dans un autre mode de réalisation (figure 6), les Demandeurs ont réalisé les spires de la self inductance sur trois niveaux de métallisation selon la filière 0,5 μ. Le composant comprend une surface carrée de 4 mm$^2$. Dans ces conditions, la self inductance occupe une surface égale à 3,5 mm$^2$ ce qui correspond à une occupation de l'ordre de 87% de la surface totale du composant.

Sur la figure 6, les niveaux de métallisation sont individualisés en M1 à M3, et les spires sont individualisées en Smj avec m nombre entier variant de 1 à 3, j nombre entier variant de 1 à R et m x j = n. En présence de plusieurs niveaux de métallisation, les spires sont superposées les unes sur les autres avec un espace d'une épaisseur déterminée entre les unes et les autres.

Sur chaque niveau, les spires sont enroulées conformément sensiblement au tracé décrit en référence à la figure 5.

Les spires du niveau M1 peuvent être connectées en série à celles du niveau M2, ces dernières pouvant être connectées aux spires de niveau M3.

Toutefois, dans un montage en série, la capacité entre spires réduit de façon très significative le rendement de la téléalimentation.

Selon l'invention, en référence à la figure 6, les spires sont avantageusement court-circuitées entre elles. L'enroulement en parallèle des spires réduit ici la valeur de la capacité de l'antenne. En effet, la capacité entre spires est annulée et seule la capacité entre les spires du niveau M1 et le substrat subsiste. Cette réduction assure une nette augmentation du rendement de la téléalimentation.

Par exemple, les courts-circuits entre spires sont réalisés par des vias métallisés V individualisés par exemple en V11 pour le via disposé entre la première spire de niveau M1 individualisée en S11 et la première spire de niveau M2 individualisée en S21.

**ANNEXE**

$$(I)\ R2 = [4\ n\ \frac{l}{e'}, + 4\ n\ (n{+}1)\frac{e}{e'}]\ x\ Rcarr\acute{e}e$$

avec

n = nombre de spires
e'= largeur des spires
e = pas des spires e' + i
Rcarrée = résistance carrée de la métallisation.
ℓ = longueur du côté de la spire intérieure de forme carrée

$$(II)\ S = nl^2 + 2\ le\ x\ n\ (n{+}1) + \frac{4e^2}{6}\ x\ n(n{+}1)\ (2n{+}1)$$

$$(III)\ E = (jM\omega\ I1)_{cr\hat{e}te}\ (\frac{1}{1 + jR2C2\omega})$$

$$(IV)\ |Z| = \frac{R2}{\sqrt{1 + (R2C2\omega)^2}}$$

$$(V)\ {-}V_P = |E|_{cr\hat{e}te}\ x\ [2\sin\theta1\ x\ \frac{RU}{\pi|Z|} - \cos\theta1\ (2\theta1\ x\ \frac{RU}{\pi|Z|} + 1)]$$

$$(VI)\ V2 = |E|\ x \cos\theta 1 - V_P$$

**Revendications**

1. Composant micro-électronique pour carte sans contact passive, destiné à être électromagnétiquement couplé à une station distante (SD) pour le transfert bidirectionnel de données entre la carte (SCS) et la station, ledit composant comprenant :

   - des moyens de traitement réalisés en technologie des circuits intégrés sur le substrat du composant, et propres à traiter un signal représentatif de données ainsi transféré,
   - une bobine (L2) pour l'alimentation par induction des moyens de traitement et pour le transfert inductif avec la station (SD) dudit signal représentatif de données, les spires de la bobine (L2) étant réalisées en technologie intégrée plane par métallisation et directement gravées sur la surface du composant,

   **caractérisé en ce que**, la transmission des données du composant vers la station s'effectuant par modulation d'amplitude obtenue par modulation de charge sur la tension d'alimentation, pour une surface donnée du composant, le nombre (n) de spires de la bobine (L2) et la largeur (e') desdites spires ont des valeurs telles que la tension (V2) aux bornes des moyens de traitement soit la plus élevée possible pour téléalimenter par induction les moyens de traitement et, **en ce que** les spires de l'inductance (L2) sont réalisées sur plusieurs niveaux et sont superposées les unes sur les autres avec un espace déterminé entre chaque niveau, chaque spire d'un niveau prédéterminé étant court-circuitée avec une spire d'un niveau adjacent.

2. Composant selon la revendication 1, **caractérisé en ce que** la surface totale du composant est de quelques mm$^2$.

3. Composant selon la revendication 2, **caractérisé en ce que** la surface totale du composant est de 8 mm$^2$.

4. Composant selon la revendication 2, **caractérisé en ce que** la surface totale du composant est de 4 mm$^2$, et **en ce que** les spires de la bobine sont réalisées sur trois niveaux de métallisation.

5. Composant selon l'une des revendications précédentes, **caractérisé en ce que** les spires de la bobine sont gravées sur le pourtour de la surface du composant, autour des moyens de traitement.

6. Composant selon l'une des revendications précédentes, **caractérisé en ce que** les moyens de traitement comprennent en outre des moyens de redressement (D2) du signal alternatif haute fréquence, transféré par induction par la station, en un signal continu, modulé en fonction des données transmises par la station, et **en ce que** les moyens de démodulation (CL, AP2) sont aptes à démoduler le signal continu modulé ainsi redressé pour récupérer les données transmises par la station.

7. Composant selon l'une des revendications précédentes, **caractérisé en ce que** les moyens de traitement comprennent en outre :

   - des moyens de récupération d'un signal d'horloge (RCK) à partir du signal alternatif, haute fréquence, transféré par induction par la station distante,
   - des moyens de mémorisation de données (MEM), cadencés selon ledit signal d'horloge ainsi récupéré,
   - des moyens de lecture/écriture de données (SEQ), cadencés selon ledit signal d'horloge ainsi récupéré.

8. Composant selon l'une des revendications précédentes, **caractérisé en ce que** la surface occupée par les moyens de traitement est inférieure à celle du composant tandis que les spires de la bobine (L2) sont directement sur la surface du composant inoccupée par les moyens de traitement.

9. Carte sans contact passive, **caractérisée en ce qu'**elle comprend un composant selon l'une des revendications précédentes.

10. Station comprenant des moyens de couplage électromagnétique sans contact avec une carte selon la revendication 9, **caractérisée en ce qu'**elle est agencée pour transmettre un signal haute fréquence qui permet simultanément la transmission de l'énergie et des données à la carte.

**11.** Procédé d'obtention d'un composant micro-électronique pour carte sans contact passive, destiné à être électromagnétiquement couplé à une station distante pour le transfert bidirectionnel de données entre le composant et la station, ledit procédé comprenant les étapes suivantes :

a) réaliser en technologie des circuits intégrés sur le substrat du composant des moyens de traitement propres à traiter un signal représentatif de données ainsi transféré,
b) réaliser en technologie intégrée plane par métallisation et graver directement sur la surface du composant les spires d'une bobine pour l'alimentation par induction des moyens de traitement du composant et pour le transfert inductif avec la station dudit signal représentatif de données,

**caractérisé en ce que**, la transmission des données du composant vers la station étant destinée à être effectuée par modulation d'amplitude obtenue par modulation de charge sur la tension d'alimentation, **en ce que**, pour une surface donnée du composant, il comprend une étape de sélection du nombre de spires et de leur largeur qui consiste à déterminer la tension (V2) aux bornes des moyens de traitement pour différentes largeurs de spires et à choisir la largeur qui confère la valeur maximale à la tension (V2) aux bornes des moyens de traitement et **en ce que** les spires de l'inductance (L2) sont réalisées sur plusieurs niveaux et sont superposées les unes sur les autres avec un espace déterminé entre chaque niveau, chaque spire d'un niveau prédéterminé étant court-circuitée avec une spire d'un niveau adjacent.

**12.** Procédé selon la revendication 11, **caractérisé en ce que** les spires de la bobine sont réalisées sur trois niveaux de métallisation, selon la filière 0,5 μ.

**Patentansprüche**

**1.** Mikroelektronisches Bauelement für eine passive kontaktlose Karte, die elektromagnetisch mit einer Fernstation (SD) zur bidirektionalen Datenübertragung zwischen der Karte (SCS) und der Station koppelbar ist, wobei das Bauelement folgende Merkmale aufweist:

- Eine in der Technologie der integrierten Schaltkreise auf dem Substrat des Bauelementes ausgebildete Verarbeitungseinrichtung zum Verarbeiten eines die übertragenen Daten repräsentierenden Signals;

- eine Spule (L2) zur Versorgung der Verarbeitungseinrichtung durch Induktion und zur induktiven Kopplung des die Daten repräsentierenden Signals mit der Station (SD), wobei die Windungen der Spule (L2) in planarer integrierter Technologie durch Metallisierung ausgebildet und direkt auf der Oberfläche des Bauelementes aufgebracht sind,

- **dadurch gekennzeichnet, dass** die Übertragung der Daten von dem Bauelement zur Station durch Amplitudenmodulation, die durch Lastmodulation der Versorgungsspannung erzielt wird, für eine vorgegebene Oberfläche des Bauelementes erfolgt, daß die Anzahl (n) der Windungen der Spule (L2) und die Breite (e') der Windungen so gewählt sind, dass die Spannung (V2) an den Anschlüssen der Verarbeitungseinrichtung die größtmögliche ist, um die Verarbeitungseinrichtung durch Induktion fern zu speisen, und dass die Windungen der Induktivität (L2) auf mehreren Ebenen ausgebildet und mit einem bestimmten Abstand zwischen jeder Ebene übereinander angeordnet sind, wobei jede Windung einer vorbestimmten Ebene mit einer Windung einer angrenzenden Ebene kurzgeschlossen ist.

**2.** Bauelement nach Anspruch 1, **dadurch gekennzeichnet, dass** die Gesamtfläche des Bauelementes einige mm$^2$ beträgt.

**3.** Bauelement nach Anspruch 2, **dadurch gekennzeichnet, dass** die Gesamtfläche des Bauelementes 8 mm$^2$ beträgt.

**4.** Bauelement nach Anspruch 2, **dadurch gekennzeichnet, dass** die Gesamtfläche des Bauelementes 4 mm$^2$ beträgt und dass die Windungen der Spule auf drei Metallisierungsebenen ausgebildet sind.

**5.** Bauelement nach einem der vorstehenden Ansprüche, **dadurch gekennzeichnet, dass** die Windungen der Spule auf dem Umkreis der Oberfläche des Bauelementes um die Verarbeitungseinrichtung herum aufgebracht sind.

**6.** Bauelement nach einem der vorstehenden Ansprüche, **dadurch gekennzeichnet, dass** die Verarbeitungseinrichtung ferner eine Schaltung (D2) zur Gleichrichtung des von der Station durch Induktion übertragenen hochfrequenten Wechselspannungssignals in ein Gleichspannungssignal aufweist, das mit den von der Station übertragenen Daten moduliert ist, und dass die Demodulationsschaltung (CL, AP2) das gleichgerichtete modulierte Signal demoduliert, um die von der Station übertragenen Daten rückzugewinnen.

**7.** Bauelement nach einem der vorstehenden Ansprüche, **dadurch gekennzeichnet, dass** die Verarbeitungseinrichtung ferner folgende Merkmale aufweist.

- Eine Schaltung zur Rückgewinnung eines Taktsignals (RCK) auf der Grundlage des von der Fernstation durch Induktion übertragenen Wechselspannungssignals;

- eine Einrichtung (MEM) zur Speicherung von Daten, die entsprechend dem rückgewonnenen Taktsignal getaktet sind, und

- eine Einrichtung (SEQ) zum Lesen/Schreiben der Daten, welche entsprechend dem rückgewonnenen Taktsignal getaktet sind.

**8.** Bauelement nach einem der vorstehenden Ansprüche, **dadurch gekennzeichnet, dass** die von der Verarbeitungseinrichtung belegte Oberfläche kleiner ausfällt als die des Bauelementes, wobei sich die Windungen der Spule (L2) direkt auf der von der Verarbeitungseinrichtung nicht belegten Oberfläche des Bauelementes befinden.

**9.** Passive kontaktlose Karte, **dadurch gekennzeichnet, dass** die Karte ein Bauelement nach einem der vorstehenden Ansprüche aufweist.

**10.** Station mit einer elektromagnetischen, kontaktlosen Kopplungseinrichtung für eine Karte nach Anspruch 9, **dadurch gekennzeichnet, dass** die Station zur Übertragung eines hochfrequenten Wechselspannungssignals vorgesehen ist, wodurch gleichzeitig Energie und Daten an die Karte übertragen werden.

**11.** Verfahren zur Herstellung eines mikroelektronischen Bauelementes für eine passive kontaktlose Karte, das zur bidirektionalen Übertragung von Daten zwischen dem Bauelement und der Station elektromagnetisch an eine Fernstation koppelbar ist, wobei das Verfahren folgende Schritte aufweist:

a) Ausbildung einer Verarbeitungseinrichtung für ein übertragenes Datensignal auf dem Substrat des Bauelementes in der Technologie integrierter Schaltkreise;

b) Ausbildung der Windungen einer Spule zur Versorgung der Verarbeitungseinrichtung des Bauelementes durch Induktion und zur induktiven Kopplung des Datensignals mit der Station durch planare integrierte Technologie mittels Metallisierung und direkte Aufbringung auf der Oberfläche des Bauelementes,

**dadurch gekennzeichnet, dass** die Übertragung der Daten von dem Bauelement zur Station durch Amplitudenmodulation erfolgt, die durch Lastmodulation der Versorgungsspannung dadurch erzielt wird, dass für eine vorgegebene Oberfläche des Bauelementes ein Schritt zur Auswahl der Anzahl der Windungen und ihrer Breite vorgesehen ist, wobei der Schritt darin besteht, die Spannung (V2) an den Anschlüssen der Verarbeitungseinrichtung für unterschiedliche Windungsbreiten zu ermitteln und deren Breite auszuwählen, die dem Maximalwert der Spannung (V2) an den Anschlüssen der Verarbeitungseinrichtung entspricht, und dass die Windungen der Induktivität (L2) auf mehreren Ebenen ausgebildet und in einem bestimmten Abstand zwischen jeder Ebene übereinander angeordnet sind, wobei jede Windung einer vorbestimmten Ebene mit einer Windung einer angrenzenden Ebene kurzgeschlossen ist.

**12.** Verfahren nach Anspruch 11, **dadurch gekennzeichnet, dass** die Windungen der Spule auf drei Metallisierungsebenen entsprechend der 0,5-μ Technologie ausgebildet sind.

**Claims**

**1.** A micro-electronic component for a passive card without contact, intended to be electromagnetically coupled to a remote station (SD) for the bidirectional transfer of data between the card (SCS) and the station, said component comprising:

- processing means produced in integrated circuit technology on the substrate of the component, and able to process a signal representative of data thus transferred,
- a coil (L2) for the supply by induction of the processing means and for the inductive transfer with the station (SD) of said signal representative of data, the turns of the coil (L2) being produced in planar integrated technology by metallization and directly engraved on the surface of the component,

**characterised in that**, the transmission of data of the component towards the station being realised by amplitude modulation obtained by load modulation on the supply voltage, for a given area of the component, the number (n) of turns of the coil (L2) and the width (e') of said turns have values such as the voltage (V2) at the terminals of the processing means be the highest possible for the remote supply by induction of the processing means and, **in that** the turns of the inductance (L2) are realised on several levels and are superimposed one above the others with a determined space between each level, each turn of a predetermined level being short-circuited with a turn of an adjacent level.

2. A component according to claim 1, **characterised in that** the total surface area of the component is of several mm$^2$.

3. A component according to claim 2, **characterised in that** the total surface area of the component is 8 mm$^2$.

4. A component according to claim 2, **characterised in that** the total surface area of the component is 4 mm$^2$, and **in that** the turns of the coil are realised on three levels of metallization.

5. A component according to any of the previous claims, **characterised in that** the turns of the coil are engraved on the periphery of the surface of the component, around the processing means.

6. A component according to any of the previous claims, **characterised in that** the processing means comprise in addition means for rectifying (D2) the AC high frequency signal, transferred by induction by the station, into a DC signal, modulated in function of the date transmitted by the station, and **in that** the demodulation means (CL, AP2) are able to demodulate the modulated DE signal thus rectified in order to recover the data transmitted by the station.

7. A component according to any of the previous claims, **characterised in that** the processing means comprise in addition:

- means for recovering a clock signal (RCK) from said AC high frequency signal, transferred by induction by the remote station,
- means for storage of data (MEM), timed according to said clock signal thus recovered,
- means for reading/writing data (SEQ), timed according to said clock signal thus recovered.

8. A component according to any of the previous claims, **characterised in that** the surface area occupied by the processing means is inferior to that of the component whereas the turns of the coil (L2) are directly on the surface of the component which is not occupied by the processing means.

9. A passive card without contact, **characterised in that** it comprises a component according to any of the previous claims.

10. A station comprising means for the electromagnetic coupling without contact, with a card according to claim 9, **characterised in that** it is adapted to transmit a high frequency signal which allows the simultaneous transfer of energy and of data to the card.

11. A method for producing a micro-electronic component for a passive card without contact, intended to be electromagnetically coupled to a remote station for the bidirectional transfer of data between the component and the station, said method comprising the following steps:

a) producing, with the integrated circuit technology, on the substrate of the component, processing means adapted to process a signal representative of data thus transferred,
b) producing, in planar integrated technology by metallization, and engrave directly on the surface of the component, the turns of a coil for the supply by induction of the processing means of the component and for the inductive transfer with the station of said signal representative of the data,

**characterised in that**, the transmission of data from the component towards the station being intended to be realised by amplitude modulation obtained by load modulation and the supply voltage, **in that**, for a given surface area of the component, it comprises a step of selection of the number of turns and of the width, consisting in the determination of the voltage (V2) at the terminals of the processing means for several widths of turns, and to select the width which provides the maximum value to the voltage (V2) at the terminals of the processing means and **in that** the turns of the inductance (L2) are realised on several levels and are superimposed one above the others with a determined space between each level, each turn of a predetermined level being short-circuited with a turn of an adjacent level.

12. A method according to claim 11 **characterised in that** the turns of the coil are realised on three metallization levels, according to a 0,5 µ technology.

## FIG.1

EP 0 750 276 B1

## *FIG.2*

SD

| | | |
|---|---|---|
| OSCILLATEUR 4,9152 Mhz | AMPLIFICATEUR | COMPOSANT BOBINE INTEGREE |
| 10 | 8 | L1  CHAMP  CM  CSC |
| | ATTENUATEUR DEPHASEUR | MAGNETIQUE |
| 18  16 | 14 | |
| MELANGEUR | AMPLIFICATEUR | données binaires |
| 20 | 26 | |

EP 0 750 276 B1

FIG.3

EP 0 750 276 B1

## *FIG.4*

## *FIG.7*

# FIG.5

# FIG.6